# EUROPEAN PATENT SPECIFICATION

(11) **EP 3 275 703 B1**
(45) Date of publication and mention of the grant of the patent: **01.01.2020**
(21) Application number: 17175175.3
(22) Date of filing: 09.06.2017
(51) Int. Cl.: B60D 1/06, B60D 1/28

(54) **SAFETY DEVICE TO COUPLE TRAILERS AND RESPECTIVE CONNECTION TO COUPLE A VEHICLE, IN PARTICULAR A CAR, TO A TRAILER**
SICHERHEITSVORRICHTUNG ZUM ANKUPPELN VON ANHÄNGERN UND ZUGEHÖRIGE VERBINDUNG UM EIN FAHRZEUG, INSBESONDERE EIN AUTO ANZUKUPPELN
DISPOSITIF DE SÉCURITÉ POUR ACCOUPLAGE D'UNE REMORQUE ET CONNEXIONS CORRESPONDANTES POUR ACCOUPLAGE D'UN VÉHICULE NOTAMMENT UNE VOITURE.

(30) Priority: 25.07.2016 IT 201600077528
(43) Date of publication of application: 31.01.2018
(73) Proprietor: Lobina, Marco, 37141 Montorio di Verona (VR) (IT)
(72) Inventor: Lobina, Marco, 37141 Montorio di Verona (VR) (IT)
(74) Representative: Münchow, Vera Ute Barbara

(56) References cited:
- NL-C2- 1 013 779
- US-A- 4 428 596
- US-A- 5 558 350

## Description

### TECHNICAL FIELD

The present invention relates to a safety device to couple trailers and a respective connection to couple a vehicle, in particular a car, to a trailer. The safety device has been developed to connect vehicles and trailers using a ball-type tow hitch in the vehicle.

### BACKGROUND OF THE ART

The tow hitch is a static mechanical tool that can be integrally mounted on a vehicle chassis so that it is possible to connect a trailer to a towing vehicle (tractor). The drawbar of the trailer is locked on it, hold in position by an appropriate stop. The most typical uses are on the back of cars to hook carriages or recreational vehicles (typically caravans or tent trolleys), on the back of a truck to turn it into a B-train and on agricultural tractors to hook up even specific agricultural machineries as well as classic trailers. Another use, albeit uncommon, is on motorcycles, where the trolley can be single-wheeled or double-wheeled. The hitch may be of any type. In the case of the ball-type tow hitch, this is the most common solution. In order to ensure the connection between the towing vehicle and the trailer, even in case of opening of the connection between the ball and the drawbar stop, in the state of the art there is provided the application of a chain or an iron wire rope, but they are often not able to withstand the forces developed when the ball junction disengages, for example, due to corrosion of the chain or rope. The loss of the trailer or even just the opening of the ball-type joint, allowing a trailer movement with respect to the vehicle, even if thanks to the chain or rope not completely detached from the vehicle, is frequently source of damages to things and, at worst, to people.

Documents NL 1013779 and US 4,428,596 disclose safety devices to ensure the connection between vehicle and trailer which are complex and little adaptable to drawbars of various kinds.

### DISCLOSURE OF THE INVENTION

The invention aims at overcoming the above-mentioned drawbacks and, in particular, proposing a safety device for the coupling of trailers and a related connection to connect a vehicle, in particular a car, to a trailer being safer and more reliable with respect to the solutions proposed by the state of the art. Another object of the invention is to avoid the complete detachment of the trailer from the vehicle and, in the event of opening of the ball joint, to limit the movements of the trailer with respect to the connecting axis.

The object is achieved by a safety device to couple trailers as defined in the first claim, comprising a plate which, in turn, comprises a first plate sector, preferably circular, and a second elongated plate sector connected thereto, wherein said first plate sector is provided with a first hole for passing the ball of a ball-type tow hitch and wherein said second elongated plate sector is provided with at least one first slot or at least one pair of first holes extending with their length in the length direction of said second plate sector and wherein the safety device further comprises a U-profile wherein the bottom of said profile comprises at least one second hole and at least one second slot, and wherein each opposite side wall comprises at least one or two third slots whose longitudinal axis/axes extend/s essentially parallel to the bottom of the U-profile, and in case of at least two slots in a wall, their longitudinal axes extend along the same straight line, and wherein the third slots located on different walls are in pairs aligned to each other.

The choice of slots, i.e. elongated windows, and not holes, such as circulars, allows, as later explained, a small movement of the trailer with respect to the vehicle in order to avoid excessive stiffness of the connection and associated leverage forces that could result in damaging the connection, especially in case of braking or downhill.

The choice of the number and length of the first slots will be dictated by the trailer drawbar geometries or by the distance between the bolts or pins connecting the plate to the drawbar and also by the stroke that you want to allow to the bolts or pins inside the slots and then from the desired play for the distance change between trailer and vehicle. An expert can easily tailor measures to meet needs.

The trailer is preferably a trolley and the vehicle a car. The elongated plate sector is preferably essentially rectangular. The term "essentially" means that the internal functional part of the sector is rectangular, however it may have inclined or wavy edges. In a variant of the invention, the first sector and the second sector form together a single elongated sector.

Preferably, the first hole has such a geometry that the maximum circle of the inserted ball can have a movement play of less than or equal to 1 mm, even more preferably a movement play of less than or equal to 0.5 mm.

Advantageously, the geometry of the hole corresponds to an area that allows the inscription of a circle or it is a circle. In this case, the diameter of the circular hole or the inscribed circle is preferably chosen so that the diameter exceeds the diameter of the ball of the tow hitch of not more than 1 mm, even more preferably not more than 0.5 mm.

These small tolerances allow the insertion of the ball into the hole, but at the same time they avoid its easy detachment from the hole.

A safety device as described above is sufficient to secure drawbars with vertical bolts to the tow hitch. Vertical bolts are bolts extending in a vertical direction with respect to the axis of the drawbar and to the vehicle and trailer footing plane.

The U-profile functions as an adaptor of the safety system to trailer drawbars having two horizontal bolts or a vertical bolt and a horizontal bolt. A vertical bolt is a bolt extending in a vertical direction with respect to the axis of the drawbar and to the vehicle and trailer footing plane. Horizontal bolts are bolts extending parallely with respect to the vehicle and trailer footing plane and vertically with respect to the drawbar axis. The safety device becomes in this way, i.e. also with the presence of the U-profile, universal and can be used for any type of trailer drawbar that can be coupled to a ball-type tow hitch.

The nature of the slots in the U-profile is useful for assembling the safety device and for ease of use.

The safety device according to the invention, with the plate alone or in combination with the U-profile, allows the adaptation of the system to drawbars which provide different configurations of fixing means. The system is very versatile and at the same time very easy to use and manufacture.

Preferably, the second hole has such a geometry that the inserted pin or bolt can have a movement play of less than or equal to 2 mm, even more preferably a movement play of less than or equal to 1 mm. Common bolts in trailer drawbars have diameters of 10, 12 or 16 mm, but bolts with other diameters are also conceivable.

Advantageously, the geometry of the hole corresponds to an area that allows the inscription of a circle or it is a circle. In this case, the diameter of the circular hole or the inscribed circle is preferably chosen so that the diameter exceeds the diameter of the pin or bolt to be inserted of not more than 2 mm, even more preferably not more than 1 mm.

In a very preferred embodiment of the invention, the second hole is a circular hole. Advantageously, also the width of the slots is chosen so as not to allow a too large movement of the pin or bolt transversely to the longitudinal axis of the slot.

The hole of the profile is used to fix the U-profile to the plate (and/or to the drawbar) with a not too large play. There is no other hole in the U-profile, but a slot, to facilitate the assembly by allowing adaptations to the different sizes of different drawbars.

Preferably, the safety device further comprises fixing means for fixing said plate or, if present, said U-profile to a trailer drawbar, and for fixing said U-profile, if present, to said plate wherein said fixing means preferably comprise a plurality of bolts and a plurality of nuts.

A system between nuts and bolts allows simple connections that can easily be adjusted in the distance between two connected elements, especially in case of the spacing between plate and U-profile or trailer drawbar. Preferably, said spacing is chosen such that - even with an opening of the stop holding the ball of the ball-type tow hitch in its seat in the drawbar - the ball is forced to remain in its seat. But even in case of a detachment between the ball and the seat, the plate is engaged with the edges of the hole and with the surface of the first sector under the ball often presenting at the lower part flattened areas, as in that place the ball is devoid of a ball segment. In order to adapt the U-profile also to drawbars having certain protrusions, the bottom of said U-profile includes, in an embodiment of the invention, a recess on an edge suitable to accommodate any of these possible protrusions of the trailer drawbar. Such recess may be, for example, rectangular.

The two opposite walls of the U-profile can, for example, be parallel to each other but also follow a divergent arrangement resulting in a section parallel to the bottom of the profile wherein the side walls recall the oblique sides of a symmetrical trapezoid. The position of the hole and the slot relative to the narrower or wider side, as determined by the course of the opposite walls, is not important, although for practical reasons it may be preferable that the slot is located on the wider side, and that the slot in the assembled state of the safety device is close to the towing element, while the hole points towards the trailer.

Advantageously, plate and U-profile are made of metal, preferably steel, but any material with mechanical and resistance characteristics sufficient to withstand the forces occurring between vehicles and trailers is suitable.

In the assembled state, the plate and the U-profile bottom are essentially parallel to each other. In a highly preferred embodiment of the invention, the safety device further comprises a reducing element applicable or applied in a detachable form on or in the first hole so as to reduce the opening area of the hole. Such a reducing element further helps to avoid the release of the ball out of the hole. It is advantageously inserted after inserting the ball into the first hole and is sufficient in its dimensions to prevent the ball at its maximum diameter from passing again through the hole.

Various shapes for the reducing element are conceivable. In a preferred embodiment of the invention, the reducing element is a thread-like or ribbon-like element, fixable or fixed to the safety device and suitable to be inserted into the first hole, such as, for example, a chain. Rings or brackets, insertable on the edge of the first hole are also conceivable. Advantageously, the chain is fixed with one end on one of the fixing means for fixing the plate or, if present, the U-profile to the trailer drawbar, for example providing a sufficiently large chain member at the end of the chain, so that it can be inserted on the bolt, for example during the assembly of the safety device.

A further aspect of the invention relates to a connection to connect a vehicle, in particular a car, to a trailer comprising:
(i) a ball-type tow hitch;
(ii) a trailer drawbar suitable to be connected to said ball-type tow hitch; and
(iii) a safety device for the connection of trailers according to the invention.

In a first embodiment, the connection for connecting a vehicle, in particular a car, to a trailer includes a safety device for connecting trailers with the plate and the U-profile, where the ball of the tow hitch is always inserted, as in the above embodiment, in said first hole of said plate. This embodiment is applicable to drawbars with horizontal bolts or pins, i.e. with bolts or pins which are vertical with respect to the drawbar axis and parallel with respect to the plane formed by the plate or to the drawbars having a vertical pin/bolt and a horizontal one.

This variant has two main embodiments. In the first embodiment, said trailer drawbar is provided with two first pins or bolts extending vertically to the axis of the drawbar and parallel to the bottom of the U-profile. The trailer drawbar is inserted into said U-profile. The two pins or bolts are each inserted into a pair of third aligned slots of said U-profile so that said U-profile is fixedly connected to said trailer drawbar. Advantageously, the opposite side walls of the profile thus comprise each at least two third slots.

The U-profile is provided with two second pins or bolts which are respectively inserted in said second hole and in said second slot of said bottom of said U-profile and are simultaneously inserted in said at least one first slot or each in one of the slots of said pair of first slots of said second elongated plate sector, such that said plate is fixedly connected to said U-profile. Advantageously, said two second pins or bolts may slide along said first slot or each in one of the slots of said pair of first slots.

For this embodiment, the plate with a single slot is preferred.

In the second embodiment, said trailer drawbar is provided with a first pin or bolt extending vertically to the axis of the drawbar and to the bottom of the U-profile and a second pin or bolt extending vertically to the axis of the drawbar and parallel to the bottom of the U-profile. Said first pin or bolt is inserted in said second hole or in said second slot of said U-profile and, simultaneously, in said at least one first slot or in one of the slots of said pair of first slots, while said second pin or bolt is inserted into a pair of third aligned slots of said U-profile, so that said U-profile is fixedly connected to said trailer drawbar. In this regard, a third slot for each wall would be sufficient. To make the safety system more versatile and adaptable also to the first embodiment, and to consider different positions of the second pin/bolt on the drawbar, again it is preferable to have two slots for each wall, even if only one will be used. Said U-profile is provided with a third pin or bolt that is inserted in said second hole or in said second slot of said U-profile, depending on the position left free from said first pin or bolt, and is simultaneously inserted in said at least one first slot or in the slot of said first pair of first slots, which is not yet occupied by said first pin or bolt of said second elongated plate sector, such that said plate is fixedly connected to said U-profile and that said first and said third pin or bolt can slide along said at least one first slot or along the slots of said pair of first slots.

In the second variant, plates with a pair of slots are preferred.

The first pin or bolt can be inserted into the hole or into the slot of the U-profile, however it is preferably inserted into the hole. In his choice, the expert takes into account the fact that a fastening in the hole is more fixed with respect to the fastening in a slot.

For all the embodiments, it is preferable that the distance between said plate and said bottom of said U-profile is adjustable, preferably by a relative positioning of nuts along the two pins or bolts connecting said plate to said drawbar or to said bottom of said U-profile. This distance adjustability helps, for example, to force, as illustrated above, the ball in its seat even if it is no longer locked due to the breaking of the drawbar lock system.

The preferred embodiment of the U-profile is the version with at least two third slots for each wall, to allow the use of the device with different drawbars.

If the plate and the U-profile are combined, the corresponding windows (slot or hole) are obviously aligned to each other to allow the passage of the pins or bolts.

A safety connection kit between a ball-type tow hitch and its trailer comprises advantageously a device as described in the first claim, with two third holes for each wall of the profile, a sufficient number of nuts, possibly washers, and bolts to be able to make connections between different forms of drawbar and the plate and/or the U-profile and two plates as defined in the first claim wherein one with a first slot and the other with a pair of first slots. Such a kit offers the possibility of applying a safety device to any type of drawbar.

Said objects and advantages will be better highlighted during the description of preferred embodiment examples of the invention given by way of example and not of limitation.

Variants of the invention are the object of the dependent claims. The description of preferred embodiment examples of the safety device and of the connection to connect a trailer to a vehicle according to the invention is given, by way of example and not of limitation, with reference to the attached drawings.

### BRIEF DESCRIPTION OF THE DRAWINGS

- Fig. 1a: illustrates a top view of an embodiment example of a plate of a safety device for the connection of trailers according to the invention.
- Fig. 1b: illustrates the plate of Figure 1a in a perspective view.
- Fig. 1c: illustrates a perspective view of another embodiment example of a plate of a safety device for the connection of trailers according to the invention.
- Fig. 1d: illustrates the plate of Figure 1c in a top view.
- Fig. 1e: illustrates a side view of the plates of Figures 1a to 1d.
- Fig. 2a: illustrates a top view of an embodiment example of a U-profile of a safety device for the connection of trailers according to the invention.
- Fig. 2b: illustrates a perspective view of the U-profile of Figure 2a.
- Fig. 2c: illustrates a front view of the U-profile of Figure 2a and 2b.
- Fig. 2d: illustrates a side view of the U-profile of Figures 2a to 2c.
- Fig. 2e: illustrates a front view, slightly angled with respect to the view of Figure 2c, of the U-profile of Figures 2a to 2d.
- Fig. 2f: illustrates a rear view, slightly angled, of the U-profile of Figures 2a to 2e.
- Fig. 3a: illustrates an exploded perspective view of a safety device for the connection of trailers with a plate and a U-profile.
- Fig. 3b: illustrates a top view of the safety device for the connection of trailers of Figure 3a in the assembled state.
- Fig. 3c: illustrates a perspective view of the safety device for the connection of trailers of Figure 3b.
- Fig. 4a: illustrates a perspective view of the safety device for the connection of trailers of Figures 3b and 3c assembled on a trailer drawbar.
- Fig. 4b: illustrates a perspective view of the safety device for the connection of trailers assembled on a trailer drawbar, as per Figure 4a, inserted with the plate on a ball-type tow hitch with the ball still outside of its seat.
- Fig. 4c: illustrates a perspective view of the safety device for the connection of trailers assembled on a trailer drawbar, as per Figure 4a, inserted with the plate on a ball-type tow hitch with the ball inside its seat.
- Fig. 5: illustrates the safety device of Figure 4c with a further safety element, a chain inserted in the hole for the passage of the ball.

### DESCRIPTION OF PREFERRED EMBODIMENTS EXAMPLES

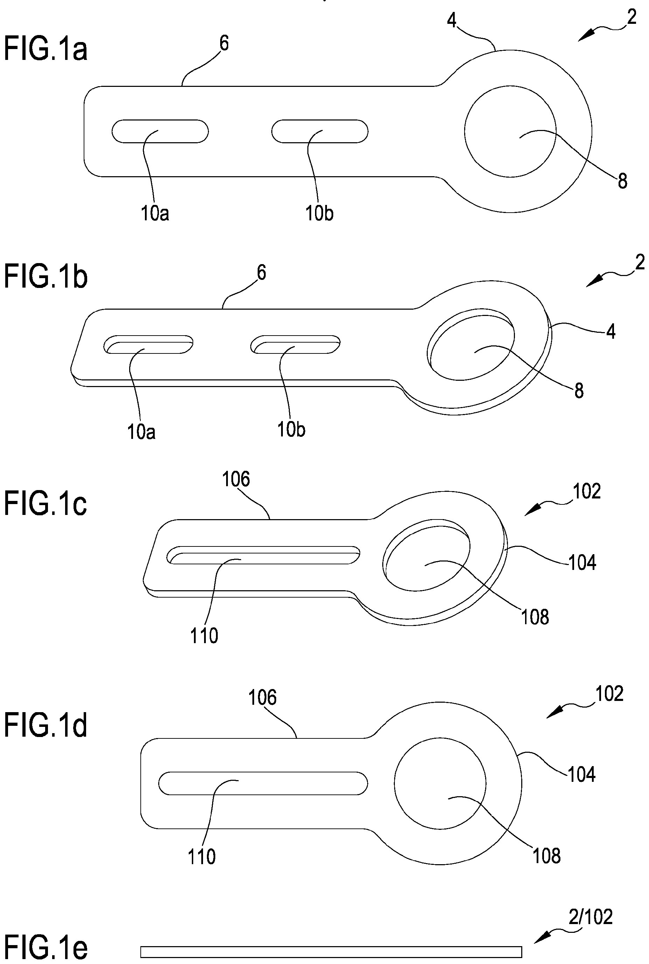

Figures 1a to 1e illustrate two embodiment examples of a plate of a safety device for the connection of trailers according to the invention. Figures 1a and 1b illustrate in a top view (Fig. 1a) and in a perspective view (Fig. 1b) a plate **2** having a circular section **4** and an elongated sector **6,** essentially rectangular. The circular sector **4** is provided with a circular hole **8,** while the elongated sector **6** is provided with two slots **10a** and **10b**. Figures 1c and 1d illustrate in a top view (Fig. 1d) and in a perspective view (Fig. 1c) a plate **102** having a circular section **104** and an elongated sector **106**, essentially rectangular. The circular sector **104** is provided with a circular hole **108**, while the elongated sector **106** is provided with a single slot **110.** Finally, Figure 1e illustrates that the plates **2** and **102** do not differ in their side view if no differences in the length of the plates **2** and **102** are considered.

In an exemplary form, some suitable dimensions will be given below for plates that can be used for trailer-drawbar and tow hitches commonly available on the market.

For the plate **102**, which is suitable to be used together with the U-profile to be applied on drawbars with one or two horizontal bolts, a total length of 210 mm is suitable, 67.5 mm of which are attributable to the elongated sector from its free end up to the middle of the slot which, in turn, has a length of 115 mm and a height of 12.5 mm. The elongated sector width is 50 mm. The circular sector has a diameter of 90 mm and its circular hole is 50.5 mm. A value of R10 is assigned to the inlet at the point of connection between the circular sector and the elongated sector. The height of the plate is 6 mm. Typical balls of the tow hitch have a diameter of 50 mm.

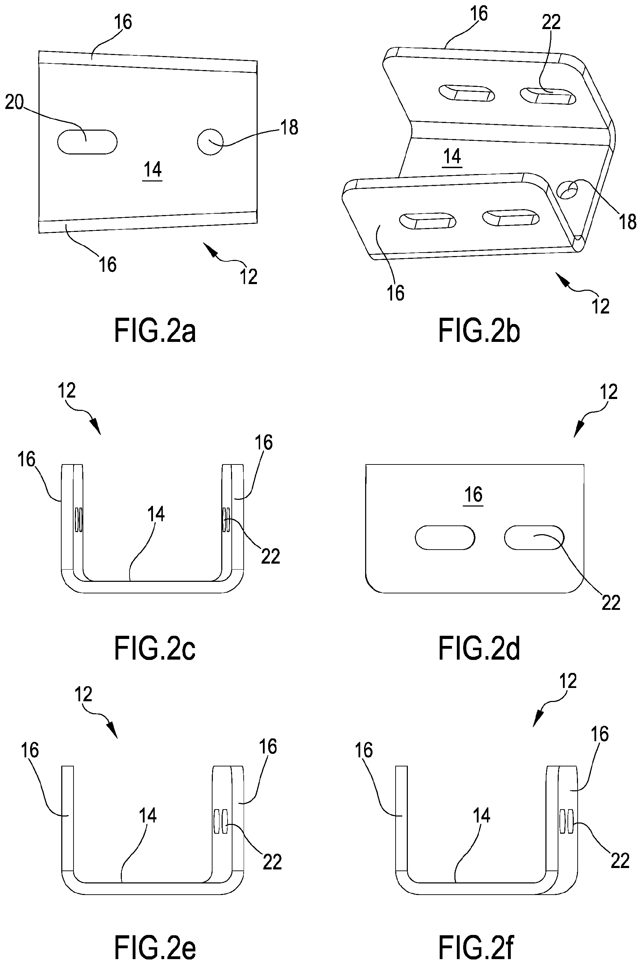

Figs. 2a to 2f illustrate different views, as described above, of an embodiment example of a U-profile **12** of a safety device for the connection of trailers according to the invention. The profile **12** has a bottom **14** and two side walls **16.** At the bottom **14** there are a circular hole **18** and a slot **20.** Each side wall **16**, on the other hand, has two slots **22.**

The U-profile, as represented, has divergent and non-parallel side walls **16**, but parallel side walls may also be conceived. An example for possible measures is: The length of the walls is 110 mm, while their height is 65 mm. The distance from the middle of a slot to the middle of the adjacent slot **22** in the same wall **16** is 45 mm, while their width is 12 mm. The height from the lower edge of the wall to the middle of the width of the slot is 37 mm and the distance from the middle of the slot of the wall on the narrowest side to the edge of the wall is 25 mm. The walls are orthogonal to the plane which includes the bottom **14**, but their curved connection corresponds to a value of R6. The round hole of the bottom has a diameter of 13 mm, the bottom slot is 30 mm long and 12 mm wide. In another example, the slot can be extended towards the hole for 4 mm. The distance of the centre of the circular hole to the edge of the bottom of the wide side of the profile is 87 mm. The distance between the walls (measured from the outside of the walls) at the narrow side is 75 mm and at the wide side is 85 mm. In a variant of the slightly bigger profile, the distance between the walls (measured from the outside of the walls) at the narrow side is 82 mm and at the wide side is 92 mm.

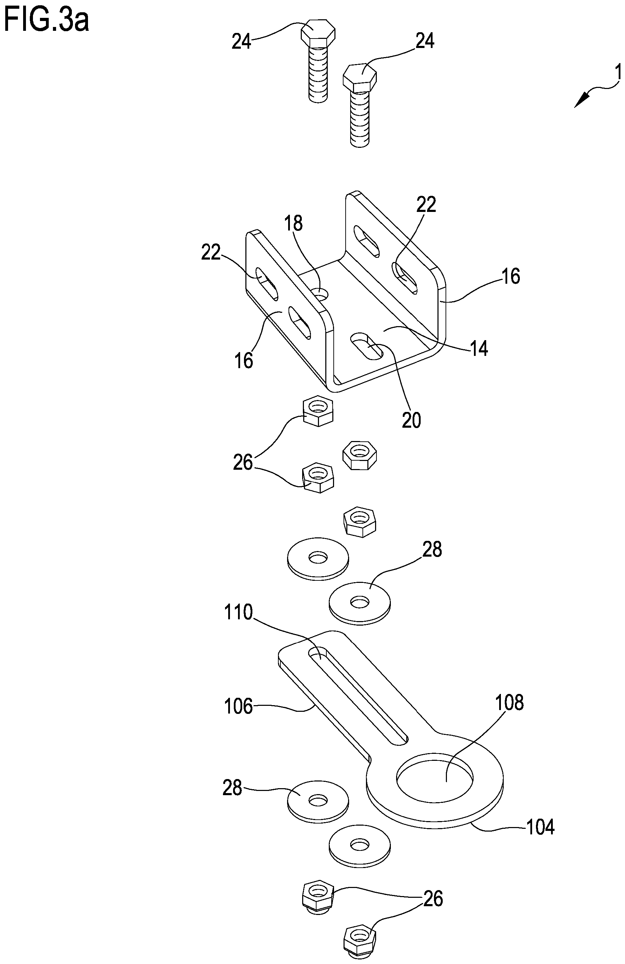

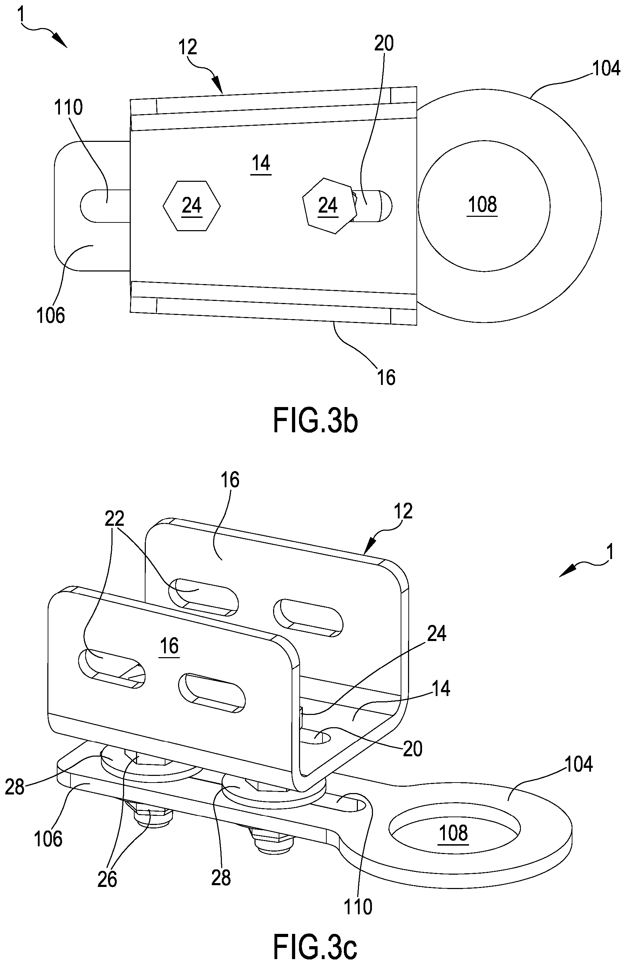

Figures 3a to 3c illustrate an exploded perspective view (Fig. 3a), in a top view (Fig. 3b), and in a perspective view of the assembled state (Fig. 3c) a safety device for the connection of trailers **1** with a plate **102** and a U-profile **12.** This type of safety device is suitable for trailer-drawbars with one or two horizontal bolts. To fix the plate **102** on the drawbar, it is necessary to fix it to the U-profile **12** which, in turn, will be fixed to the trailer-drawbar (not represented). In the represented assembly between plate **102** and U-profile **12**, they are both combined with two bolts **24** one of which passes through the circular hole **18** and the other through the slot **20** of the U-profile **12.** Both bolts **24** pass through the slot **110** of the plate **102.** To fixedly fix the bolts, i.e. plate **102** and U-profile **12** among each other, nuts/lock-nuts **26** and washers **28** are used. The bolts **24** can slip inside the slot **110.**

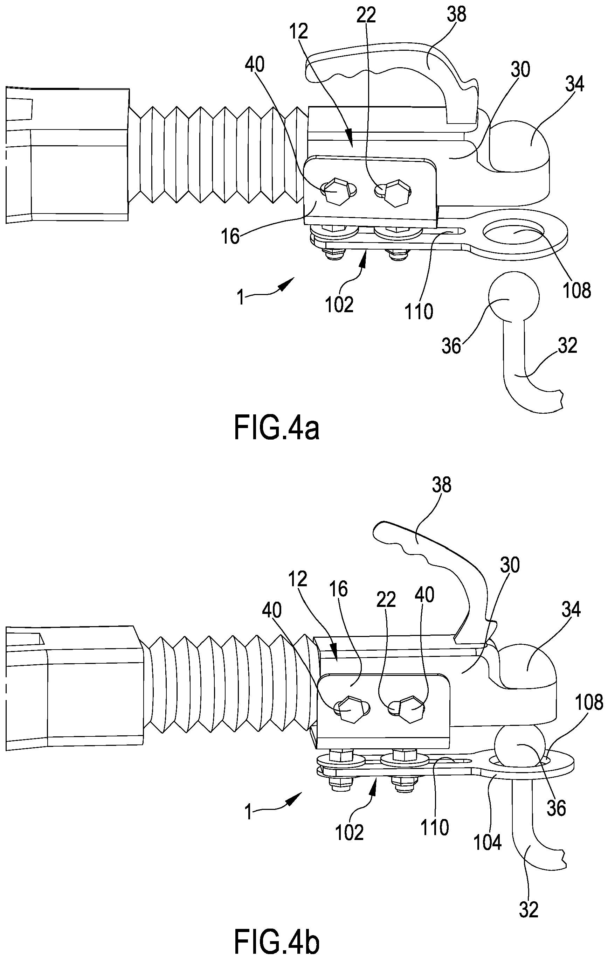

Figures 4a to 4c illustrate how the safety device **1** of Figures 3a to 3c is assembled on a trailer-drawbar **30** and a ball-type tow hitch **32.** The drawbar **30** has two horizontal bolts **40** that are used to fix the U-profile **12** in which the drawbar **30** is inserted. In this regard, each bolt **40** is inserted into a slot **22** of the U-profile and then it passes through the respective holes (not visible) in the drawbar **30** and finally through the slots **22** in the opposite side wall **16** of the U-profile **12.** The fastening is done with the respective nuts, washers and lock-nuts. Figure 4a shows the safety device **1** assembled on the drawbar **30**, but not yet on the tow hitch **32.** In Figure 4b the ball **36** of the tow hitch **32** is inserted in the circular hole **108** of the plate **102** of the safety device **1.** Finally, in Figure 3c drawbar **30** and tow hitch **32** and safety device **1** are fully assembled. The ball **36** (not visible) is in its cup-shaped seat **34** of the drawbar **30**, whose stop **38** is blocked against the ball **36.** The moderate distance between the drawbar **30** and the plate **102** (as noted in particular in Figure 4b) and the entrapment of the circular sector **104** under the ball **36** in combination with a diameter of the circular hole **108** which just exceeds the diameter of the ball **36**, makes it difficult to remove the ball **36** from the circular hole **108** of the plate **102** of the safety device **1**, also in case of opening/breaking of the direct connection between the drawbar **30** and the tow hitch **32** (ball **36** - seat **34** - stop **38).**

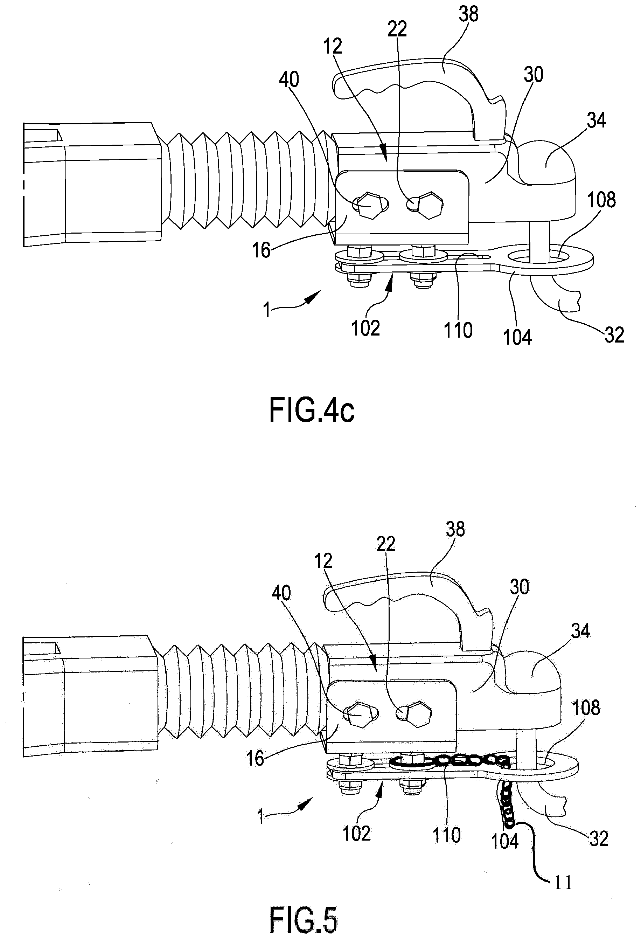

In a not represented variant, the trailer drawbar may be equipped with a horizontal bolt and a vertical bolt. In this case, the U-profile is fixed with the horizontal bolt through a pair of slots **22** in the two opposite side walls **16** of the profile **12.** Then the drawbar will be fixed with its vertical bolt in the plate and in the U-profile, passing through the respective openings, thus connecting also the plate and the U-profile. A further connection between the profile **12** and the plate **102** (which is independent from the fastening to the drawbar) will be made with another bolt, which is passed through the respective still free openings in the plate and in the U-profile. Fig. 5 illustrates the safety device of Figure 4c with a further safety element, a chain **11** inserted in the hole **108** for the passage of the ball. The chain **11** is fixed at one end on a bolt that fixes the plate **102** through the U-profile **16** on the drawbar **30.** After the insertion of the ball into the hole **108**, the free end of the chain has been inserted through hole **108.** In this way, the area of the hole **108** available for the passage of the ball is reduced, and in a rare case of detachment of the ball from the drawbar, the ball finds no longer the necessary space to accidentally slip off the hole **108.** The chain can be used with any variant of the safety devices described herein. It is also possible to fix the second end of the chain **11** on the safety device.

On implementation, further modifications or non-described embodiment variants may be made to the safety device to couple trailers and to the respective connection to connect a vehicle, particularly a car, to a trailer, object of the invention. If such modifications or such variants should fall within the scope of the following claims, they should all be considered protected by the present patent.

## Claims

1. Safety device to couple trailers (1) comprising a plate (2; 102) which, in turn, comprises a first plate sector (4; 104), preferably circular, an elongated second plate sector (6; 106) connected thereto and a U-profile (12) wherein said first plate sector (4; 104) is provided with a first hole (8; 108) for passing the ball (34) of a ball-type tow hitch (32) **characterized in that** said elongated second plate sector (6; 106) is provided with at least a first slot (110) or at least one pair of first slots (10a, 10b) extending with their length in the length direction of said second plate sector (6; 106) **and in that** the bottom (14) of said U-profile (12) comprises at least a second hole (18) and at least a second slot (20) and wherein each opposite side wall (16) comprises at least one or two third slots (22) whose longitudinal axis/es extend/s essentially parallel to the bottom (14) of the U-profile (12), and in the case of at least two slots (22) in a wall (16), their longitudinal axes extend along the same straight line and wherein the third slots (22) located on different walls (16) are in pairs aligned to each other.

2. Safety device to couple trailers (1) according to claim 1 **characterized in that** the device (1) further comprises fixing means (24, 26, 28, 40, 42) to fix said U-profile (12) to a drawbar of a trailer (30) and to fix said U-profile (12) to said plate (2; 102) wherein said fixing means (24, 26, 28, 40, 42) preferably comprise a plurality of bolts (24, 40, 42) and a plurality of nuts (26).

3. Safety device to couple trailers (1) according to anyone of the claims 2 or 3 **characterized in that** the bottom (14) of said U-profile (12) comprises a recess at an edge suitable to receive possible protrusions of the trailer drawbar (30).

4. Safety device to couple trailers (1) according to anyone of the preceding claims **characterized in that** said safety device further comprises a reducing element applicable or applied in detachable form on or in the first hole (8; 108) so as to reduce the opening area of the hole (8; 108).

5. Safety device to couple trailers (1) according to claim 4 **characterized in that** said reducing element is a thread-like or ribbon-like element (11) fixable or fixed to said safety device.

6. Connection to connect a vehicle, in particular a car, to a trailer comprising:
(i) a ball-type tow hitch (32);
(ii) a trailer drawbar (30) suitable to be connected to said ball-type tow hitch (32); and
(iii) a safety device to couple trailers (1) according to anyone of the preceding claims.

7. Connection to connect a vehicle, in particular a car, to a trailer according to claim 6 **characterized in that**
• said connection comprises a safety device to couple trailers (1) according to anyone of the claims from 1 to 6; and **in that**
• the ball (36) of said tow hitch (32) is inserted into said first hole (8; 108) of said plate (2; 102).

8. Connection to connect a vehicle, in particular a car, to a trailer according to claim 7 **characterized in that**
• said trailer drawbar (30) is provided with two first pins or bolts (40) which extend vertically to the axis of the drawbar (30) and parallely to the bottom (14) of the U-profile (12);
• said trailer drawbar (30) is inserted into said U-profile (12);
• said two pins or bolts (40) are each inserted into a pair of aligned third slots (22) of said U-profile (12) such that said U-profile (12) is fixedly connected to said trailer drawbar (30); and **in that**
• said U-profile (12) is provided with two second pins or bolts (24) which are respectively inserted in said second hole (18) and in said second long slot (20) of said bottom (14) of said U-profile (12) and which are contemporarily inserted both in said at least one first slot (110) or each in one of the slots of said pair of first slots (10a; 10b) of said elongated second plate sector (6; 106) such that said plate (2; 102) is fixedly connected to said U-profile (12) and **in that** said two second pins or bolts (24) can slide along said first slot (110) or each in one of the slots of said pair of first slots (10a; 10b).

9. Connection to connect a vehicle, in particular a car, to a trailer according to claim 7 **characterized in that**
• said trailer drawbar is provided with a first pin or bolt which extends vertically to the axes of the drawbar (30) and to the bottom (14) of the U-profile (12) and with a second pin or bolt which extends vertically to the axis of the drawbar (30) and parallely to the bottom (14) of the U-profile (12);
• said first pin or bolt is inserted into said second hole (18) or into said second slot (20) of said U-profile (12) and simultaneously into said at least one first slot (110) or into one of the slots of said pair of first slots (10a; 10b);
• said second pin or bolt is inserted in a pair of aligned third slots (22) of said U-profile (12) such that said U-profile (12) is fixedly connected to said trailer drawbar (30); and **in that**
• said U-profile (12) is provided with a third pin or bolt which is inserted into said second hole (18) or into said second slot (20) of said U-profile depending on the position left free from said first pin or bolt and is simultaneously inserted in said at least one first slot (110) or in the slot of said pair of first slots (10a; 10b) which is not yet occupied by said first pin or bolt of said elongated second plate sector (6; 106) such that said plate (2; 102) is fixedly connected to said U-profile (12) and that said first and said third pin or bolt can slide along said at least one first slot (110) or along the slots of said pair of first slots (10a; 10b).

10. Connection to connect a vehicle, in particular a car, to a trailer according to anyone of the claims from 6 to 9 **characterized in that** the distance between said plate (2; 102) and said bottom (14) of said U-profile (12) is adjustable, preferably by a corresponding positioning of nuts along the two pins or bolts which connect said plate (2; 102) to said bottom (14) of said U-profile (12).

## Patentansprüche

1. Sicherheitsvorrichtung zum Ankuppeln von Anhängern (1), umfassend eine Platte (2; 102), die wiederum einen ersten Plattenabschnitt (4; 104), vorzugsweise kreisförmig, einen damit verbundenen länglichen zweiten Plattenabschnitt (6; 106) und ein U-Profil (12) umfasst, wobei der erste Plattenabschnitt (4; 104) mit einem ersten Loch (8; 108) zum Durchführen der Kugel (34) einer Kugelkopf-Anhängerkupplung (32) versehen ist, **dadurch gekennzeichnet, dass** besagter länglicher zweiter Plattenabschnitt (6; 106) mit mindestens einem ersten Schlitz (110) oder mindestens einem Paar erster Schlitze (10a, 10b) versehen ist, die sich mit ihrer Länge in Längsrichtung des zweiten Plattenabschnitts (6) erstrecken; 106) **und dass** der Boden (14) besagten U-Profils (12) mindestens ein zweites Loch (18) und mindestens einen zweiten Schlitz (20) aufweist und wobei jede gegenüberliegende Seitenwand (16) mindestens einen oder zwei dritte Schlitze (22) aufweist, deren Längsachse(n) sich im Wesentlichen parallel zum Boden (14) des U-Profils (12) erstreckt/en, und im Falle von mindestens zwei Schlitzen (22) in einer Wand (16) erstrecken sich ihre Längsachsen entlang der gleichen Geraden und wobei die dritten Schlitze (22), die auf verschiedenen Wänden (16) angeordnet sind, paarweise zueinander ausgerichtet sind.

2. Sicherheitsvorrichtung zum Ankuppeln von Anhängern (1) gemäß Anspruch 1, **dadurch gekennzeichnet, dass** die Vorrichtung (1) ferner Befestigungsmittel (24, 26, 28, 40, 42) zum Befestigen des U-Profils (12) an einer Zugdeichsel eines Anhängers (30) und zum Befestigen besagten U-Profils (12) an der Platte (2; 102) umfasst, wobei besagte Befestigungsmittel (24, 26, 28, 40, 42) vorzugsweise eine Vielzahl von Bolzen (24, 40, 42) und eine Vielzahl von Muttern (26) umfassen.

3. Sicherheitsvorrichtung zum Kuppeln von Anhängern (1) gemäß einem beliebigen der Ansprüche 2 oder 3, **dadurch gekennzeichnet, dass** der Boden (14) des U-Profils (12) eine Aussparung an einer Kante aufweist, die geeignet ist, mögliche Vorsprünge der Anhängerzugdeichsel (30) aufzunehmen.

4. Sicherheitsvorrichtung zum Ankuppeln von Anhängern (1) gemäß einem beliebigen der vorstehenden Ansprüche, **dadurch gekennzeichnet, dass** die Sicherheitsvorrichtung ferner ein Reduktionselement umfasst, das in abnehmbarer Form auf oder in der ersten Bohrung (8; 108) anbringbar oder angebracht ist, um den Öffnungsbereich der Bohrung (8; 108) zu verkleinern.

5. Sicherheitsvorrichtung zum Ankuppeln von Anhängern (1) gemäß Anspruch 4, **dadurch gekennzeichnet, dass** das Reduktionselement ein faden- oder bandförmiges Element (11) ist, das an der Sicherheitsvorrichtung fixierbar oder befestigt ist.

6. Verbindung zum Verbinden eines Fahrzeugs, insbesondere eines Kraftfahrzeugs, mit einem Anhänger, umfassend:
(i) eine Kugelkopf-Anhängerkupplung (32);
(ii) eine Anhängerzugdeichsel (30), die geeignet ist, mit der Kugelkopf-Anhängerkupplung (32) verbunden zu werden; und
iii) eine Sicherheitsvorrichtung zum Kuppeln von Anhängern (1) nach einem beliebigen der vorstehenden Ansprüche.

7. Verbindung zum Verbinden eines Fahrzeugs, insbesondere eines Kraftfahrzeugs, mit einem Anhänger gemäß Anspruch 6, **dadurch gekennzeichnet, dass**
- besagte Verbindung eine Sicherheitsvorrichtung zum Ankuppeln von Anhängern (1) nach einem beliebigen der Ansprüche von 1 bis 6 umfasst; und dass
- die Kugel (36) der Anhängerkupplung (32) in besagtes erstes Loch (8; 108) besagter Platte (2; 102) eingesetzt ist.

8. Verbindung zum Verbinden eines Fahrzeugs, insbesondere eines Kraftfahrzeugs, mit einem Anhänger gemäß Anspruch 7, **dadurch gekennzeichnet, dass**
• die Anhängerzugdeichsel (30) mit zwei ersten Stiften oder Bolzen (40) versehen ist, die sich vertikal zur Achse der Zugdeichsel (30) und parallel zum Boden (14) des U-Profils (12) erstrecken;
• die Anhängerdeichsel (30) in besagtes U-Profil (12) eingesetzt ist;
• besagte zwei Stifte oder Bolzen (40) jeweils in ein Paar ausgerichteter dritter Schlitze (22) besagten U-Profils (12) eingesetzt sind, so dass besagtes U-Profil (12) fest mit der Anhängerzugdeichsel (30) verbunden ist; und dass
• besagtes U-Profil (12) mit zwei zweiten Stiften oder Bolzen (24) versehen ist, die jeweils in besagtes zweites Loch (18) und in besagten zweiten langen Schlitz (20) besagten Bodens (14) des U-Profils (12) eingesetzt sind und die gleichzeitig in besagten mindestens einen ersten Schlitz (110) oder jeweils in einen der Schlitze besagten Paares der ersten Schlitze (10a; 10b) besagten länglichen zweiten Plattenabschnitts (6; 106) eingesetzt sind, so dass besagte Platte (2; 102) fest mit dem U-Profil (12) verbunden ist und dass die beiden zweiten Stifte oder Bolzen (24) entlang des ersten Schlitzes (110) oder jeweils in einem der Schlitze besagten Paares der ersten Schlitze (10a; 10b) gleiten können.

9. Verbindung zum Verbinden eines Fahrzeugs, insbesondere eines Kraftfahrzeugs, mit einem Anhänger nach Anspruch 7, **dadurch gekennzeichnet, dass**
• die Anhängerzugdeichsel mit einem ersten Stift oder Bolzen versehen ist, der sich vertikal zu den Achsen der Zugdeichsel (30) und zum Boden (14) des U-Profils (12) erstreckt, und mit einem zweiten Stift oder Bolzen, der sich vertikal zur Achse der Zugdeichsel (30) und parallel zum Boden (14) des U-Profils (12) erstreckt;
• der erste Stift oder Bolzen in das zweite Loch (18) oder in den zweiten Schlitz (20) besagten U-Profils (12) und gleichzeitig in den mindestens einen ersten Schlitz (110) oder in einen der Schlitze besagten Paares der ersten Schlitze (10a; 10b) eingeführt wird;
• der zweite Stift oder Bolzen in ein Paar ausgerichteter dritter Schlitze (22) besagten U-Profils (12) eingesetzt ist, so dass das U-Profil (12) fest mit der Anhängerzugdeichsel (30) verbunden ist; und dass
• das U-Profil (12) mit einem dritten Stift oder Bolzen versehen ist, der in das zweite Loch (18) oder, in Abhängigkeit von der von dem ersten Stift oder Bolzen frei gelassenen Position, in den zweiten Schlitz (20) besagten U-Profils eingesetzt und gleichzeitig in den mindestens einen ersten Schlitz (110) oder in den Schlitz des Paares von ersten Schlitzen (10a; 10b)) eingesetzt wird, die noch nicht durch den ersten Stift oder Bolzen des länglichen zweiten Plattenabschnitts (6; 106) belegt ist, so dass besagte Platte (2; 102) fest mit besagtem U-Profil (12) verbunden ist und dass besagter erster und besagter dritter Stift oder Bolzen entlang des mindestens einen ersten Schlitzes (110) oder entlang der Schlitze besagten Paares von ersten Schlitzen (10a; 10b) gleiten können.

10. Verbindung zum Verbinden eines Fahrzeugs, insbesondere eines Kraftfahrzeugs, mit einem Anhänger nach einem beliebigen der Ansprüche von 6 bis 9, **dadurch gekennzeichnet, dass** der Abstand zwischen besagter Platte (2; 102) und dem Boden (14) des U-Profils (12) einstellbar ist, vorzugsweise durch eine entsprechende Positionierung von Muttern entlang der beiden Stifte oder Bolzen, die besagte Platte (2; 102) mit dem Boden (14) des U-Profils (12) verbinden.

## Revendications

1. Dispositif de sécurité pour atteler des remorques (1) comprenant une plaque (2 ; 102) qui, à son tour, comprend un premier secteur de plaque (4; 104), de préférence circulaire, un deuxième secteur de plaque allongé (6 ; 106) relié à celui-ci et un profil en U (12) où ledit premier secteur de plaque (4; 104) est pourvu d'un premier trou (8; 108) pour faire passer la boule (34) d'un attelage de remorquage à boule (32) **caractérisé en ce que** ledit deuxième secteur de plaque allongé (6; 106) est pourvu d'au moins une première fente (110) ou au moins une paire de premières fentes (10a, 10b) s'étendant avec leur longueur dans la direction longitudinale dudit deuxième secteur de plaque (6 ; 106) **et en ce que** le fond (14) dudit profilé en U (12) comprend au moins un deuxième trou (18) et au moins une deuxième fente (20) et où chaque paroi latérale opposée (16) comprend au moins une ou deux troisièmes fentes (22) dont le ou les axes longitudinaux sont essentiellement parallèles au fond (14) du profilé en U (12), et dans le cas d'au moins deux fentes (22) dans une paroi (16), leurs axes longitudinaux s'étendent le long de la même ligne droite et où les troisièmes fentes (22) situées sur des parois différentes (16) sont alignées par paires.

2. Dispositif de sécurité pour atteler des remorques (1) selon la revendication 1, **caractérisé en ce que** le dispositif (1) comprend en outre des moyens de fixation (24, 26, 28, 40, 42) pour fixer ledit profil en U (12) à un timon d'une remorque (30) et pour fixer ledit profil en U (12) à ladite plaque (2 ; 102), où lesdits moyens de fixation (24, 26, 28, 40, 42) comprenant de préférence une pluralité de boulons (24, 40, 42) et une pluralité de écrous (26).

3. Dispositif de sécurité pour atteler des remorques (1) selon l'une quelconque des revendications 2 ou 3, **caractérisé en ce que** le fond (14) dudit profil en U (12) comprend un évidement sur un bord approprié pour recevoir d'éventuelles saillies du timon de remorque (30).

4. Dispositif de sécurité pour atteler des remorques (1) selon l'une quelconque des revendications précédentes, **caractérisé en ce que** ledit dispositif de sécurité comprend en outre un élément réducteur applicable ou appliqué sous forme détachable sur ou dans le premier trou (8 ; 108) de manière à réduire la surface d'ouverture du trou (8; 108).

5. Dispositif de sécurité pour atteler des remorques (1) selon la revendication 4 **caractérisé en ce que** ledit élément réducteur est un élément en forme de fil ou de ruban (11) pouvant être fixé ou fixé audit dispositif de sécurité.

6. Connexion pour relier un véhicule, en particulier une voiture, à une remorque comprenant :
(i) un crochet de remorquage à boule (32) ;
(ii) un timon de remorque (30) pouvant être relié audit crochet de remorquage à boule (32); et
(iii) un dispositif de sécurité pour atteler les remorques (1) selon l'une quelconque des revendications précédentes.

7. Connexion pour relier un véhicule, en particulier une voiture, à une remorque selon la revendication 6, **caractérisée en ce que**
• ladite connexion comprend un dispositif de sécurité pour atteler des remorques (1) selon l'une quelconque des revendications de 1 à 6 ; et **en ce que**
• la boule (36) dudit crochet de remorquage (32) est insérée dans ledit premier trou (8; 108) de ladite plaque (2; 102).

8. Connexion pour relier un véhicule, en particulier une voiture, à une remorque selon la revendication 7, **caractérisée en ce que**
• ledit timon de remorque (30) est muni de deux premiers goupilles ou boulons (40) qui s'étendent verticalement à l'axe du timon (30) et parallèlement au fond (14) du profil en U (12);
• ledit timon de remorque (30) est inséré dans ledit profil en U (12);
• lesdits deux goupilles ou boulons (40) sont chacun insérés dans une paire de troisièmes fentes alignées (22) dudit profil en U (12) de sorte que ledit profil en U (12) est relié de manière fixe audit timon de remorque (30); et **en ce que**
• ledit profil en U (12) est muni de deux deuxièmes goupilles ou boulons (24) qui sont respectivement insérés dans ledit deuxième trou (18) et dans ladite deuxième fente longue (20) dudit fond (14) dudit profil en U (12) et qui sont insérés simultanément dans ladite au moins une première fente (110) ou dans chacune des fentes de ladite paire des premières fentes (10a; 10b) dudit deuxième secteur de plaque allongé (6; 106) de telle sorte que ladite plaque (2; 102) est reliée de manière fixe audit profil en U (12) et **en ce que** lesdites deux deuxièmes goupilles ou boulons (24) peuvent glisser le long de ladite première fente (110) ou chacune dans une des fentes de ladite paire des premières fentes (10a; 10b).

9. Connexion pour relier un véhicule, en particulier une voiture, à une remorque selon la revendication 7, **caractérisée en ce que**
• ledit timon de remorque est muni d'une première goupille ou boulon qui s'étend verticalement aux axes du timon (30) et au fond (14) du profil en U (12) et d'une deuxième goupille ou boulon qui s'étend verticalement à l'axe du timon (30) et parallèlement au fond (14) du profil en U (12);
• ladite première goupille ou ledit premier boulon est inséré dans ledit second trou (18) ou dans ladite seconde fente (20) dudit profil en U (12) et simultanément dans ladite au moins une première fente (110) ou dans l'une des fentes de ladite paire de premières fentes (10a; 10b) ;
• ladite deuxième goupille ou boulon est insérée dans une paire de troisièmes fentes alignées (22) dudit profil en U (12) de sorte que ledit profil en U (12) est relié de façon fixe à ledit timon de remorque (30); et **en ce que**
• ledit profil en U (12) est pourvu d'une troisième goupille ou d'un troisième boulon qui est inséré dans ledit deuxième trou (18) ou dans ladite deuxième fente (20) dudit profil en U en fonction de la position laissée libre par ladite première goupille ou ledit premier boulon et est simultanément inséré dans ladite au moins une première fente (110) ou dans la fente de ladite paire des premières fentes (10a; 10b) qui n'est pas encore occupé par ladite première goupille ou ledit premier boulon dudit deuxième secteur de plaque allongé (6 ; 106) de telle sorte que ladite plaque (2; 102) est reliée de manière fixe audit profil en U (12) et que lesdites première et troisième goupilles ou boulons peuvent glisser le long de ladite au moins une première fente (110) ou le long des fentes de ladite paire de premières fentes (10a; 10b).

10. Connexion pour relier un véhicule, en particulier une voiture, à une remorque selon l'une quelconque des revendications de 6 à 9, **caractérisée en ce que** la distance entre ladite plaque (2; 102) et ledit fond (14) dudit profil en U (12) est réglable, de préférence par un positionnement correspondant des écrous le long des deux goupilles ou boulons qui relient ladite plaque (2; 102) audit fond (14) dudit profil en U (12).
